(19) Europäisches Patentamt
European Patent Office
Office européen des brevets

(11) EP 3 388 480 B1

(12) EUROPÄISCHE PATENTSCHRIFT

(45) Veröffentlichungstag und Bekanntmachung des Hinweises auf die Patenterteilung:
**03.06.2020 Patentblatt 2020/23**

(51) Int Cl.:
***C08K 5/00*** *(2006.01)* ***C08K 5/521*** *(2006.01)*
***C09K 21/14*** *(2006.01)* ***C08J 9/00*** *(2006.01)*

(21) Anmeldenummer: **18162259.8**

(22) Anmeldetag: **16.03.2018**

(54) **POLY(ALKYLENPHOSPHATE) MIT VERRINGERTER HYGROSKOPIE**

POLY(ALKYLENPHOSPHATES) WITH REDUCED HYGROSCOPICITY

POLY(ALKYLPHOSPHATE) À FAIBLE HYGROSCOPIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.04.2017 EP 17165686**

(43) Veröffentlichungstag der Anmeldung:
**17.10.2018 Patentblatt 2018/42**

(73) Patentinhaber: **LANXESS Deutschland GmbH**
**50569 Köln (DE)**

(72) Erfinder:
- **HANSEL, Jan-Gerd**
  **51469 Bergisch Gladbach (DE)**
- **TEBBE, Heiko**
  **41539 Dormagen (DE)**

(56) Entgegenhaltungen:
**EP-A1- 0 771 810 EP-A1- 2 687 534**
**EP-A1- 2 848 640**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 388 480 B1

## Beschreibung

Die vorliegende Erfindung betrifft Mischungen von Poly(alkylenphosphaten) mit verringerter Hygroskopie, deren Verwendung als Flammschutzmittel sowie weiterhin Polyurethane, die die erfindungsgemäßen Poly(alkylenphosphate) enthalten.

Poly(alkylenphosphate) können in verschiedenen technischen Anwendungen eingesetzt werden, z. B. als Schmierstoffe (vgl. US 2,632,767), Hydraulikflüssigkeiten (vgl. US 4,056,480), Weichmacher (vgl. US 2,782,128) und Flammschutzmittel (vgl. EP 2 687 535 B1). Gegenüber vergleichbaren, für die genannten Anwendungen ebenfalls geeigneten Alkylphosphaten bieten Poly(alkylenphosphate) technische Vorteile, beispielsweise eine niedrige Flüchtigkeit bei gleichzeitig niedriger Viskosität.

Störend in diesen Anwendungen wirkt sich jedoch die ausgeprägte Hygroskopie der Poly-(alkylenphosphate) aus. Als Hygroskopie bezeichnet man die Eigenschaft eines Stoffes, Wasser aus dem Wasserdampf der Luft aufzunehmen. Durch diesen Vorgang steigt der Wassergehalt der Poly-(alkylenphosphate) unkontrolliert an, was in den genannten Anwendungen zu Schwierigkeiten führen kann. So kann der erhöhte Wassergehalt in Hydraulikölen zur Bildung von Dampfblasen führen, die unerwünschte Kompressibilität zur Folge haben können. Flammschutzmittel mit ungewollten Wassergehalt können Hydrolyse der zu schützenden Matrix (z. B. ein Kunststoff) verursachen. Im Fall der Herstellung von Polyurethanen ist der Wassergehalt der eingesetzten Flammschutzmittel immer unerwünscht, da er zu unkontrollierter Verschäumung führt. Selbst bei wassergetriebenen Polyurethanschaumstoffen sollten alle Rohstoffe einen möglichst niedrigen und konstanten Wassergehalt aufweisen, damit die Schaumstoffeigenschaften durch die exakte Dosierung des Treibmittels Wasser kontrolliert eingestellt werden können. Allgemein kann ein erhöhter Wassergehalt die Korrosion von metallischen Werkstoffen fördern.

Darüber hinaus kann ein Wassergehalt zur Hydrolyse der Poly(alkylenphosphate) selber führen. Dabei bilden sich saure Partialester der Phosphorsäure. Diese Säurebildung ist in den genannten Anwendungen unerwünscht und behindert den Einsatz der Poly(alkylenphosphate).

Aus den genannten Gründen ist die Verwendung von Poly(alkylenphosphaten) an Schutzmaßnahmen gekoppelt, die über die gesamte Produktlogistik hinweg einen Zutritt von feuchter Luft zum Produkt verhindern müssen. Beispielsweise müssen Lagertanks mit Inertgas überlagert werden. Dies erschwert die Verarbeitung und bedeutet einen technischen Mehraufwand.

In EP 2 848 640 A1 werden Mischungen aus Poly(alkylenphosphaten) und Phosphorsäureestern, deren Löslichkeit in Wasser bei 25 °C weniger als 3,0 g/l beträgt, beschrieben. Diese Mischungen zeichnen sich durch eine niedrigere Hygroskopie als die darin enthaltenen Poly(alkylenphosphate) aus und sind z. B. als Flammschutzmittel geeignet. Nachteilig an diesen Mischungen ist, dass ihre Zubereitung einen Mehraufwand bedeutet und dass die Phosphorsäureester-Komponente der Mischung vorteilhafte Eigenschaften der reinen Poly(alkylenphosphate), wie beispielsweise eine niedrige Flüchtigkeit, negativ beeinflussen kann.

Aus der EP-A 2 687 534 sind Mischungen von halogenfreien Poly(alkylenphosphaten) bekannt, die als halogenfreie Flammschutzmittel für Polyurethane geeignet sind und dabei sowohl mit Polyether-Polyolen als auch mit Polyester-Polyolen verarbeitet werden können und die sich durch niedrige Fogging-Werte auszeichnen. Das Problem der Hygroskopie von Poly(alkylenphosphaten) wird hier nicht adressiert.

Aufgabe der vorliegenden Erfindung war es daher, Produkte bereit zu stellen, die die Vorteile bekannter Poly(alkylenphosphate) mit sich bringen, sich aber durch geringere Hygroskopie auszeichnen und somit leichter verarbeiten lassen.

Diese Aufgabe wird gelöst durch Mischungen bestimmter, ausgewählter Poly(alkylenphosphate). Gegenstand der vorliegenden Erfindung sind daher Mischungen enthaltend mindestens drei Poly(alkylenphosphate) der Formel (I)

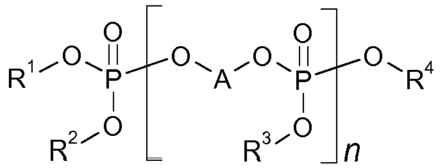

(I),

worin

$R^1$, $R^2$, $R^3$ und $R^4$ unabhängig voneinander jeweils für einen 2-Methylpropylrest stehen,
A für einen Rest der Formel $-CHR^5-CHR^6-(O-CHR^7-CHR^8)_a-$ steht, worin

a für eine ganze Zahl von 1 bis 5 steht und

$R^5$, $R^6$, $R^7$ und $R^8$ unabhängig voneinander für Wasserstoff oder Methyl stehen, und

*n* für eine ganze Zahl von 0 bis 100, bevorzugt von 0 bis 50 und besonders bevorzugt von 0 bis 30 steht,

mit der Maßgabe, dass sich mindestens drei der in der Mischung enthaltenen Poly(alkylenphosphate) der Formel (I) zumindest in der Anzahl n der Repetiereinheiten voneinander unterscheiden, und

der gewichtete Mittelwert der Anzahl der Repetiereinheiten $\overline{n}$ der Poly-(alkylenphosphate) der Formel (I) im Bereich von 1,10 bis 4,00 liegt.

Bevorzugt handelt es sich bei den in den erfindungsgemäßen Mischungen enthaltenen Poly(alkylenphosphaten) der Formel (I) um solche, worin a für die Zahl 1 steht. Ebenfalls bevorzugt handelt es sich bei den in den erfindungsgemäßen Mischungen enthaltenen Poly(alkylenphosphaten) der Formel (I) um solche, worin die Reste $R^5$, $R^6$, $R^7$ und $R^8$ alle gleich sind und für Wasserstoff stehen.
Ebenfalls bevorzugt handelt es sich bei den in den erfindungsgemäßen Mischungen enthaltenen Poly(alkylenphosphaten) der Formel (I) um solche, worin die Reste $R^1$, $R^2$, $R^3$ und $R^4$ alle gleich sind und für 2-Methylpropylreste. stehen.
Die erfindungsgemäßen Mischungen enthalten mindestens drei, bevorzugt mehr als drei verschiedene Poly(alkylenphosphate) der allgemeinen Formel (I), wobei sich mindestens drei in der Mischung enthaltene Poly(alkylenphosphate) zumindest in der Anzahl *n* der Repetiereinheiten und damit in ihrer Molmasse voneinander unterscheiden. Zur Beschreibung solcher Mischungen benutzt der Fachmann geeignete Mittelwerte, wie beispielsweise die zahlenmittlere Molmasse $M_n$ und den gewichteten Mittelwert der Anzahl der Repetiereinheiten $\overline{n}$ der in der Mischung enthaltenen Moleküle der Formel (I).
Bevorzugt weisen die in den erfindungsgemäßen Mischungen enthaltenen Poly(alkylenphosphate) der Formel (I) einen Mittelwert der Anzahl der Repetiereinheiten $\overline{n}$ auf, der im Bereich von 1,2 bis 3,0; besonders bevorzugt im Bereich von 1,3 bis 2,0 und ganz besonders bevorzugt im Bereich von 1,30 bis 1,90 liegt.
Im Falle der vorliegenden Erfindung wird die zahlenmittlere Molmasse $M_n$ der in der erfindungsgemäßen Mischung enthaltenen Poly(alkylenphosphate) der Formel (I) durch Gelpermeationschromatographie mit Tetrahydrofuran als Elutionsmittel gegen Polystyrolstandards bestimmt. Diese Methode ist dem Fachmann bekannt, beispielsweise aus DIN 55672-1:2007-08. Aus $M_n$ lässt sich unter Berücksichtigung der Stöchiometrie der Formel (I) der gewichtete Mittelwert der Anzahl der Repetiereinheiten $\overline{n}$ der in der Mischung enthaltenen Poly(alkylenphosphate) leicht berechnen (siehe Beispiele).
Ganz besonders bevorzugt sind Mischungen enthaltend mindestens drei Poly(alkylenphosphate) der Formel (I), worin

a für die Zahl 1 steht,
$R^5$, $R^6$, $R^7$ und $R^8$ alle gleich sind und für Wasserstoff stehen und
*n* für eine ganze Zahl von 0 bis 100, bevorzugt von 0 bis 50 und besonders bevorzugt von 0 bis 30 steht, mit der Maßgabe, dass sich mindestens drei der in der Mischung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\overline{n}$ der Poly-(alkylenphosphate) der Formel (I) im Bereich von 1,10 bis 4,00, bevorzugt von 1,2 bis 3,0, besonders bevorzugt von 1,3 bis 2,0 und ganz besonders bevorzugt von 1,30 bis 1,90 liegt. Ganz bevorzugt sind Mischungen enthaltend mindestens drei Poly(alkylen-phosphate) der Formel (I), worin
a für die Zahl 1 steht,
$R^1$, $R^2$, $R^3$ und $R^4$ alle gleich sind und für 2-Methylpropylreste stehen,
$R^5$, $R^6$, $R^7$ und $R^8$ alle gleich sind und für Wasserstoff stehen und
*n* für eine ganze Zahl von 0 bis 100, bevorzugt von 0 bis 50 und besonders bevorzugt von 0 bis 30 steht,
mit der Maßgabe, dass sich mindestens drei der in der Mischung enthaltenen Po-ly(alkylenphosphate) der Formel (I) zumindest in der Anzahl *n* der Repetiereinheiten voneinander unterscheiden, und
der gewichtete Mittelwert der Anzahl der Repetiereinheiten $\overline{n}$ der Poly-(alkylenphosphate) der Formel (I) im Bereich von 1,10 bis 4,00, bevorzugt von 1,2 bis 3,0, besonders bevorzugt von 1,3 bis 2,0 und ganz besonders bevorzugt von 1,30 bis 1,90 liegt.

Die erfindungsgemäßen Mischungen können prinzipiell hergestellt werden durch dem Fachmann bekannte Methoden zur Herstellung von Alkylphosphaten, beispielsweise wie sie in EP-A 2 687 534 beschrieben sind.
Weiterer Gegenstand der vorliegenden Erfindung ist ein Verfahren zur Herstellung der erfindungsgemäßen

Mischungen das dadurch gekennzeichnet ist, dass in einer ersten Stufe eine Dihydroxyverbindung der Formel (II)

HO-A-OH (II),

worin A die oben angegebenen allgemeinen und bevorzugten Bedeutungen hat, mit Phosphoroxychlorid $POCl_3$ umgesetzt wird, wobei pro Mol an Dihydroxyverbindung der Formel (II) mehr als 1,0 Mol und weniger als 2,0 Mol an $POCl_3$ eingesetzt wird, und die so erhaltene Mischung von Chlorphosphaten der Formel (III)

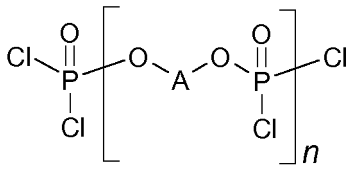

(III),

worin n für eine ganze Zahl von 0 bis 100, bevorzugt von 0 bis 50 und besonders bevorzugt von 0 bis 30 steht, in einer zweiten Stufe mit 2-Methylpropanol umgesetzt wird.

Bevorzugt werden zur Herstellung der erfindungsgemäßen Mischungen pro Mol an Dihydroxyverbindung der Formel (II) 1,4 bis 1,8 Mol an $POCl_3$ eingesetzt.

Das zur Herstellung der erfindungsgemäßen Mischungen mit einem Mittelwert der Anzahl der Repetiereinheiten $\bar{n}$ im Bereich von 1,10 bis 4,00 günstigste Molverhältnis, innerhalb des oben angegebenen Bereichs, von Dihydroxyverbindungen der Formel (II) zu Phosphoroxychlorid $POCl_3$ lässt sich durch Reihenversuche, wie sie dem Fachmann vertraut sind, einfach ermitteln.

Das erfindungsgemäße Verfahren kann in einem breiten Temperaturbereich durchgeführt werden. Im allgemeinen wird das erfindungsgemäße Verfahren im Temperaturbereich von 0 bis 100 °C durchgeführt. Bevorzugt wird in der ersten Stufe bei einer Temperatur von 5 bis 40 °C gearbeitet und in der zweiten Stufe im allgemeinen bei einer Temperatur von 5 bis 30 °C.

Das erfindungsgemäße Verfahren kann in einem weiten Druckbereich durchgeführt werden. Vorzugsweise wird die erste Stufe bei einem Druck von 10 bis 1000 mbar durchgeführt und die zweite Stufe bei Atmosphärendruck.

Bevorzugt handelt es sich bei den erfindungsgemäßen Mischungen um bei etwa 23 °C flüssige Stoffe.

Bevorzugt weisen die erfindungsgemäßen Mischungen bei 23 °C eine dynamische Viskosität zwischen 20 und 500 mPas auf. Besonders bevorzugt beträgt die dynamische Viskosität bei 23 °C zwischen 30 und 200 mPas.

Die erfindungsgemäßen Mischungen eignen sich zur Verwendung als Flammschutzmittel und zur Herstellung von Zubereitungen, die als Flammschutzmittel verwendet werden. Weiterer Gegenstand der vorliegenden Erfindung ist die Verwendung der erfindungsgemäßen Mischungen als Flammschutzmittel.

Die Mischungen können als Flammschutzmittel in allen dem Fachmann bekannten Anwendungen für Flammschutzmittel verwendet werden. Bevorzugt werden die erfindungsgemäßen Mischungen als Flammschutzmittel für

- synthetische Polymere, wie Polyolefine, Polyvinylchlorid, Polycarbonate, Styrol-basierte (Co-)Polymere, Polyamide, Polyester, Polyurethane, Elastomere und Duroplaste wie Epoxidharze, Ungesättigte Polyesterharze und Phenol-Formaldehydharze,

- Werkstoffe pflanzlichen Ursprungs, wie Holz, Holz-Kunststoff-Komposite, Cellulosebasierte Werkstoffe und Cellulosederivate, Papier und Pappe, und

- Werkstoffe tierischen Ursprungs, wie Leder, verwendet.

Besonders bevorzugt werden die erfindungsgemäßen Mischungen als Flammschutzmittel für Polyurethane verwendet. Ganz besonders bevorzugt werden die Mischungen als Flammschutzmittel für Polyurethanschaumstoffe verwendet.

Gegenstand der vorliegenden Erfindung sind auch Zubereitungen, die als Flammschutzmittel verwendet werden. Diese Zubereitungen enthalten außer den erfindungsgemäßen Mischungen mindestens ein Hilfsmittel ausgewählt aus der Gruppe bestehend aus den von der Oligomerenmischung verschiedenen Flammschutzmitteln, Antioxidantien und Stabilisatoren, Polyolen, Katalysatoren sowie Farbmittel.

Die von den erfindungsgemäßen Mischungen verschiedenen Flammschutzmittel sind beispielsweise

- organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycol-bis(diphenylphosphat), chlorhaltige Phosphorsäureester wie z. B. Tris(chlorisopropyl)phosphat oder Tris(dichloropropyl)-phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, wie z. B. Hydroxymethanphosphonsäurediethylester, 5,5-Dimethyl-1,3,2-dioxaphosphorinan-2-oxid-Derivate, 9,10-Dihydro-9-oxa-10-phosphaphenanthren-10-oxid (DOPO) und seine Derivate,

- anorganische Phosphorverbindungen, wie beispielsweise Ammoniumphosphat, Ammoniumpolyphosphat, Melaminphosphat, Melaminpolyphosphat,

- Stickstoffverbindungen, wie beispielsweise Melamin, Melamincyanurat,

- Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether, oder

- anorganische Verbindungen, wie beispielsweise Aluminiumhydroxid, Boehmit, Magnesiumhydroxid, Blähgraphit oder Tonmineralien.
  Die Antioxidantien und Stabilisatoren sind beispielsweise

- sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine, Tocopherole, oder

- Epoxyverbindungen und Carbodiimide.
  Die Polyole sind beispielsweise

- 2 bis 8 Hydroxylgruppen aufweisende Polyether, Polyester, Polycarbonate oder Polyesteramide mit einem Molekulargewicht von 400 bis 8.000 g/mol, oder

- 2 bis 8 Hydroxylgruppen aufweisende Verbindungen mit einem Molekulargewicht von 32 bis 399 g/mol.
  Die Katalysatoren sind beispielsweise

- mit Alkylgruppen substituierte Amine, Amidine und Guanidine,

- Organozinn-Verbindungen oder

- Organophosphor-Verbindungen.
  Die Farbmittel sind beispielsweise

- lösliche organische Farbstoffe,

- Pigmente, wie organische Pigmente, Eisenoxidpigmente oder Ruße.

Werden die Mischungen als Flammschutzmittel für Polyurethanschaumstoffe verwendet, so handelt es sich bei den Polyurethanschaumstoffen um Polyurethanweichschaumstoffe oder um Polyurethanhartschaumstoffe. Bevorzugt werden die Mischungen als Flammschutzmittel für Polyurethanweichschaumstoffe verwendet, welche aus Polyether-Polyolen hergestellt werden, d.h. Polyether-Polyurethanweichschaumstoffe. In einer alternativen, ebenfalls bevorzugten Ausführungsform der Erfindung werden die Mischungen als Flammschutzmittel für Polyurethanweichschaumstoffe verwendet, welche aus Polyester-Polyolen hergestellt werden, d.h. Polyester-Polyurethanweichschaumstoffe.

Gegenstand der vorliegenden Erfindung sind weiterhin auch Polyurethane, die die erfindungsgemäßen Mischungen enthalten. Durch geeignete Wahl der Menge an enthaltener Mischung lassen sich diese Polyurethane flammwidrig herstellen.

Die erfindungsgemäßen flammwidrigen Polyurethane können hergestellt werden, indem man mindestens ein organisches Polyisocyanat mit einer Polyolkomponente enthaltend mindestens eine Verbindung mit mindestens zwei gegenüber Isocyanaten reaktionsfähigen Wasserstoffatomen in Gegenwart einer erfindungsgemäßen Mischung und gegebenenfalls in Gegenwart von üblichen Treibmitteln, Stabilisatoren, Katalysatoren, Aktivatoren und/oder weiteren üblichen Hilfs- und Zusatzstoffen umsetzt.

Die erfindungsgemäßen Mischungen werden in einer Menge von 0,5 bis 30 Gewichtsteilen, bevorzugt 3 bis

25 Gewichtsteile, bezogen auf 100 Gewichtsteile Polyolkomponente, eingesetzt.

Bei den Polyurethanen handelt es sich um Polymere auf Isocyanatbasis, die vorwiegend Urethan- und/oder Isocyanurat- und/oder Allophanat- und/oder Uretdion- und/oder Harnstoff- und/oder Carbodiimidgruppen aufweisen. Die Herstellung von Polymeren auf Isocyanatbasis ist an sich bekannt und z. B. in DE-OS 16 94 142, DE-OS 16 94 215 und DE-OS 17 20 768 sowie im Kunststoff-Handbuch Band VII, Polyurethane, herausgegeben von G. Oertel, Carl-Hanser-Verlag München, Wien 1993, beschrieben.

Bei den erfindungsgemäßen flammwidrigen Polyurethanen handelt es sich um duroplastische Polyurethane, Polyurethanschaumstoffe, Polyurethan-Elastomere, thermoplastische Polyurethane, Polyurethan-Beschichtungen und -Lacke, Polyurethan-Klebstoffe und -Bindemittel oder Polyurethan-Fasern.

In einer bevorzugten Ausführungsform der Erfindung handelt es sich bei den erfindungsgemäßen flammwidrigen Polyurethanen um flammwidrige Polyurethanschaumstoffe.

Polyurethanschaumstoffe werden grob in weiche und harte Schaumstoffe unterschieden. Zwar können Weich- und Hartschaumstoffe grundsätzlich in etwa die gleiche Raumdichte und Zusammensetzung aufweisen, jedoch sind die Polyurethanweichschäume nur gering vernetzt und weisen bei Druckbelastung nur einen geringen Verformungswiderstand auf. Im Gegensatz dazu besteht die Struktur der Polyurethanhartschäume aus hoch vernetzten Einheiten und der Polyurethanhartschaum zeigt bei Druckbelastung einen sehr hohen Verformungswiderstand. Der typische Polyurethanhartschaum ist geschlossenzellig und weist nur eine niedrige Wärmeleitzahl auf. Primär wird bei der Herstellung von Polyurethanen, die über die Reaktion von Polyolen mit Isocyanaten abläuft, über die Struktur und Molmasse des Polyols sowie über die Reaktivität und Anzahl (Funktionalität) der im Polyol enthaltenen Hydroxylgruppen die spätere Schaumstruktur und seine Eigenschaften beeinflusst. Weitere Einzelheiten zu Hart- und Weichschaumstoffen, den zu ihrer Herstellung einsetzbaren Ausgangsstoffen sowie zu Verfahren zu ihrer Herstellung finden sich in Norbert Adam, Geza Avar, Herbert Blankenheim, Wolfgang Friederichs, Manfred Giersig, Eckehard Weigand, Michael Halfmann, Friedrich-Wilhelm Wittbecker, Donald-Richard Larimer, Udo Maier, Sven Meyer-Ahrens, Karl-Ludwig Noble und Hans-Georg Wussow: "Polyurethanes", Ullmann's Encyclopedia of Industrial Chemistry Release 2005, Electronic Release, 7th ed., chap. 7 ("Foams"), Wiley-VCH, Weinheim 2005.

Bevorzugt weisen die erfindungsgemäßen Polyurethanschaumstoffe Raumgewichte von 10 - 150 kg/m$^3$ auf. Besonders bevorzugt weisen sie Raumgewichte von 20 - 50 kg/m$^3$ auf.

Für die Herstellung der Schaumstoffe auf Isocyanatbasis werden folgende Ausgangskomponenten eingesetzt:

1) Aliphatische, cycloaliphatische, araliphatische, aromatische und heterocyclische Polyisocyanate (z. B. W. Siefken in Justus Liebigs Annalen der Chemie, 562, S. 75-136), beispielsweise solche der Formel $Q(NCO)_n$, in der n = 2 bis 4, vorzugsweise 2 bis 3, und Q einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen, bedeuten. Besonders bevorzugt werden in der Regel die technisch leicht zugänglichen Polyisocyanate, die sich vom 2,4- und/oder 2,6-Toluylendiisocyanat bzw. von 4,4'- und/oder 2,4'-Diphenylmethandiisocyanat ableiten.

2) Verbindungen mit mindestens zwei gegenüber Isocyanaten reaktionsfähigen Wasserstoffatomen mit einem Molekulargewicht von 400 bis 8.000 g/mol ("Polyolkomponente"). Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen. Soll der Polyurethanschaum ein Weichschaum sein, so werden bevorzugt Polyole mit Molmassen von 2.000 bis 8.000 g/mol und 2 bis 6 Hydroxylgruppen pro Molekül eingesetzt. Soll hingegen ein Hartschaum hergestellt werden, so werden bevorzugt hochverzweigte Polyole mit Molmassen von 400 bis 1.000 g/mol und 2 bis 8 Hydroxylgruppen pro Molekül eingesetzt. Bei den Polyolen handelt es sich um Polyether und Polyester sowie Polycarbonate und Polyesteramide, wie sie für die Herstellung von homogenen und von zellförmigen Polyurethanen an sich bekannt sind und wie sie etwa in der DE-OS 28 32 253 beschrieben werden. Die mindestens zwei Hydroxylgruppen aufweisenden Polyether und Polyester sind erfindungsgemäß bevorzugt.

Die erfindungsgemäßen Polyurethanschaumstoffe lassen sich also durch entsprechende, leicht dem Stand der Technik zu entnehmende Wahl der Ausgangsstoffe als Hart- oder Weichschaumstoffe herstellen.

Gegebenenfalls sind weitere Ausgangskomponenten Verbindungen mit mindestens zwei gegenüber Isocyanaten reaktionsfähigen Wasserstoffatomen und einem Molekulargewicht von 32 bis 399 g/mol. Auch in diesem Fall versteht man hierunter Hydroxylgruppen und/oder Aminogruppen und/oder Thiogruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4 gegenüber Isocyanaten reaktionsfähige Wasserstoffatome auf. Beispiele hiefür werden ebenfalls in der DE-OS 28 32 253 beschrieben.

3) Wasser und/oder leicht flüchtige organische Substanzen als Treibmittel, z. B. n-Pentan, i-Pentan, Cyclopentan, Aceton, halogenhaltige Alkane, wie Trichlormethan, Methylenchlorid oder Chlorfluoralkane, $CO_2$ und andere.

4) Gegebenenfalls werden Hilfs- und Zusatzmittel mitverwendet, wie Katalysatoren der an sich bekannten Art, oberflächenaktive Zusatzstoffe, wie Emulgatoren und Schaumstabilisatoren, Reaktionsverzögerer, z. B. sauer reagierende Stoffe wie Salzsäure oder organische Säurehalogenide, ferner Zellregler der an sich bekannten Art, wie Paraffine oder Fettalkohole und Dimethylpolysiloxane sowie Pigmente oder Farbstoffe und weitere Flammschutzmittel, ferner Stabilisatoren gegen Alterungs- und Witterungseinflüsse, Kernverfärbungsinhibitoren, Weichmacher und fungistatisch und bakteriostatisch wirkende Substanzen sowie Füllstoffe, wie Bariumsulfat, Kieselgur, Ruß oder Schlämmkreide (DE-OS 27 32 292). Als Kernverfärbungsinhibitoren können insbesondere sterisch gehinderte Trialkylphenole, Alkylester der 3-(3,5-Di-tert.-butyl-4-hydroxyphenyl)-propionsäure, Benzofuran-2-one, sekundäre aromatische Amine, Phosphite, Phenothiazine oder Tocopherole enthalten sein.

Als weitere Flammschutzmittel können neben den erfindungsgemäßen Mischungen in den erfindungsgemäßen Polyurethanen noch folgende Verbindungen enthalten sein:

- organische Phosphorverbindungen, wie beispielsweise Triethylphosphat, Triphenylphosphat, Diphenylkresylphosphat, Trikresylphosphat, isopropylierte oder butylierte Arylphosphate, aromatische Bisphosphate, Neopentylglycolbis(diphenylphosphat), chlorhaltige Phosphorsäureester wie z. B. Tris(chlorisopropyl)phosphat oder Tris(dichloropropyl)-phosphat, Dimethylmethanphosphonat, Diethylethanphosphonat, Dimethylpropanphosphonat, Diethylphosphinsäure-Derivate und -Salze, andere oligomere Phosphate oder Phosphonate, Hydroxylgruppen-haltige Phosphorverbindungen, wie z. B. Hydroxymethanphosphonsäurediethylester, 5,5-Dimethyl-1,3,2-dioxaphosphorinane-2-oxid-Derivate, 9,10-Dihydro-9-oxa-10-phosphaphenanthren-10-oxid (DOPO) und seine Derivate,

- anorganische Phosphorverbindungen, wie beispielsweise Ammoniumphosphat, Ammoniumpolyphosphat, Melaminphosphat, Melaminpolyphosphat,

- Stickstoffverbindungen, wie beispielsweise Melamin, Melamincyanurat,

- Bromverbindungen, wie beispielsweise Alkylester einer Tetrabrombenzoesäure, bromhaltige Diole hergestellt aus Tetrabromphthalsäureanhydrid, bromhaltige Polyole, bromhaltige Diphenylether,

- anorganische Flammschutzmittel, wie beispielsweise Aluminiumhydroxid, Boehmit, Magnesiumhydroxid, Blähgraphit oder Tonmineralien.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, Carl-Hanser-Verlag, München, 1993, auf den Seiten 104 bis 123 beschrieben.

Weiterer Gegenstand der vorliegenden Erfindung ist ein Verfahren zur Herstellung von Polyurethanen durch Umsetzung von organischen Polyisocyanaten mit einer Polyolkomponente enthaltend mindestens eine Verbindung mit mindestens 2 gegenüber Isocyanaten reaktionsfähigen Wasserstoffatomen und üblichen Treibmitteln, Stabilisatoren, Katalysatoren, Aktivatoren und/oder weiteren üblichen Hilfs- und Zusatzstoffen bei 20 bis 80 °C, in dem in einer Menge von 0,5 bis 30 Gewichtsteilen bezogen auf 100 Gewichtsteile Polyolkomponente, mindestens eine erfindungsgemäße Mischung eingesetzt wird. Bevorzugt werden die Mischungen in einer Menge von 3 bis 25 Gewichtsteilen bezogen auf 100 Gewichtsteile Polyolkomponente eingesetzt.

Zur Durchführung des Verfahrens zur Herstellung von erfindungsgemäßen Polyurethanen werden die oben beschriebenen Reaktionskomponenten nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US 2,764,565 beschrieben werden. Einzelheiten über Verarbeitungseinrichtungen, die auch erfindungsgemäß in Frage kommen, werden im Kunststoff-Handbuch Band VII, Polyurethane, herausgegeben von G. Oertel, Carl-Hanser-Verlag, München, Wien 1993, auf den Seiten 139 bis 192 beschrieben.

Nach dem erfindungsgemäßen Verfahren lassen sich auch kalthärtende Schaumstoffe herstellen (GB-PS 11 62 517, DE-OS 21 53 086). Selbstverständlich können aber auch Schaumstoffe durch Blockverschäumung oder nach dem an sich bekannten Doppeltransportbandverfahren hergestellt werden. Polyisocyanuratschaumstoffe werden nach den hierfür bekannten Verfahren und Bedingungen hergestellt.

Das erfindungsgemäße Verfahren erlaubt die Herstellung von Polyurethanschaumstoffen als Hart- oder Weichschäume in kontinuierlicher oder diskontinuierlicher Herstellungsweise oder als geschäumte Formartikel. Bevorzugt ist das erfindungsgemäße Verfahren bei der Herstellung von Weichschaumstoffen, die durch ein Blockverschäumungsverfahren hergestellt werden.

Die nach der Erfindung erhältlichen Polyurethane finden bevorzugt Anwendung in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

Die, die erfindungsgemäßen Mischungen enthaltenden-erfindungsgemäßen Zubereitungen lassen sich aus bekannten Komponenten nach bekannten Methoden herstellen. Die erfindungsgemäßen Zubereitungen sind flüssig, gut zu dosieren und daher sehr leicht zu verarbeiten. Die Gefahr einer unerwünschten Kontamination mit Wasser bei Luftkontakt ist durch die verringerte Hygroskopie reduziert.

Anhand der nachfolgenden Beispiele wird die Erfindung näher erläutert, ohne dass dadurch eine Einschränkung der Erfindung bewirkt werden soll.

## Beispiele

## Herstellungsbeispiele

### Allgemeine Synthesevorschrift für die erfindungsgemäßen Mischungen (Synthesebeispiele S1 bis S4 und Vergleichsbeispiel S5)

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf 10 bis 20 °C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30 °C angehoben. Ein nahezu farbloser, flüssiger Rückstand verblieb.

In einem weiteren Reaktor mit Rührer, Tropftrichter und Rückflusskühler wurde bei 20 bis 30 °C die in Tabelle 1 angegebenen Menge 2-Methylpropanol bzw. n-Butanol vorgelegt und mit dem oben erhaltenen Rückstand versetzt. Die Mischung wurde weiter bei einer Temperatur im Bereich von 20 bis 30 °C bis zum Abklingen der Reaktion gerührt, und dann durch Zugabe von Natronlauge neutralisiert. Es bildeten sich zwei klare flüssige Phasen. Diese wurden getrennt und die organische Phase durch Destillation von überschüssigem Reagenz befreit. Der Destillationsrückstand wurde mit Wasser gewaschen und schließlich wurde restliches Wasser destillativ entfernt. Als Rückstand verblieben die erfindungsgemäßen Mischungen in Form farbloser Flüssigkeiten. Die Viskositäten der hergestellten Produkte wurden mit einem handelsüblichen Kugelfall-Viskosimeter bei 23 °C bestimmt und in Tabelle 1 aufgelistet.

### Synthesevorschrift für die nicht erfindungsgemäße Vergleichssubstanz gemäß EP-A 2 687 534 (Synthesebeispiel VS1)

Ein Reaktor mit Rührer, Tropftrichter, Rückflusskühler und Vakuumeinrichtung wurde mit der in Tabelle 1 angegebenen Menge (Gewichtsteile) Phosphoroxychlorid befüllt. Das Phosphoroxychlorid wurde auf eine Temperatur von 10 bis 20 °C temperiert. Bei einem Vakuum im Bereich von 500 bis 700 mbar wurde die in der Tabelle 1 angegebene Menge Diethylenglycol zugetropft. Nach Ende des Zutropfens wurde der Druck weiter bis auf schließlich 5 bis 15 mbar abgesenkt und die Temperatur auf einen Wert von 20 bis 30 °C angehoben. Ein nahezu farbloser, flüssiger Rückstand verblieb. In einem weiteren Reaktor mit Rührer, Tropftrichter und Rückflusskühler wurde bei einer Temperatur im Bereich von 20 bis 30 °C die in Tabelle 1 angegebenen Menge Ethanol vorgelegt und mit dem oben erhaltenen Rückstand versetzt. Die Mischung wurde weiter bei 20 bis 30 °C bis zum Abklingen der Reaktion gerührt, und dann durch Zugabe von konzentrierter Natronlauge neutralisiert. Daraufhin wurde so viel Dichlormethan und Wasser zugefügt, dass zwei klare flüssige Phasen entstanden. Diese wurden getrennt und die organische Phase durch Destillation vom Dichlormethan, überschüssigem Ethanol und Wasser befreit. Als Rückstand verblieben das nicht erfindungsgemäßen Oligomere in Form einer farblosen Flüssigkeit. Die Viskosität des hergestellten Produkts wurde mit einem handelsüblichen Kugelfall-Viskosimeter bei 23 °C bestimmt und in Tabelle 1 aufgelistet.

### Bestimmung des gewichteten Mittelwerts der Anzahl der Repetiereinheiten $\bar{n}$ in den Mischungen S1 bis S5 und VS1

Die in den Synthesebeispielen S1 bis S5 und VS1 hergestellten Produkte erwiesen sich nach Analyse durch Gelpermeationschromatographie (GPC) als Mischungen. Die zahlenmittleren Molmassen $M_n$ der Mischungen wurden durch GPC mit Tetrahydrofuran als Elutionsmittel gegen Polystyrolstandards in Anlehnung an die Methode aus DIN

55672-1:2007-08 bestimmt. Der gewichtete Mittelwert der Anzahl der Repetiereinheiten $\overline{n}$ der in der Mischung enthaltenen Poly-(alkylenphosphate) entsprechend der Formel (I) wurde aus der gemessenen zahlenmittleren Molmasse $M_n$ nach folgender Formel berechnet:

$$\overline{n} = (M_n - M_E)/M_R$$

mit

$\overline{n}$ : gewichteter Mittelwert der Anzahl der Repetiereinheiten der in der Mischung enthaltenen Poly(alkylenphosphate) der Formel (I),

$M_n$: zahlenmittlere Molmasse in g/mol durch Gelpermeationschromatographie bestimmt,

$M_E$: Summe der Molmassen der Endgruppen in g/mol und

$M_R$: Molmasse der Repetiereinheit in g/mol.

Für die Mischungen S1 bis S5 aus Poly(alkylenphosphaten) der Formel (I) mit $R^1 = R^2 = R^3 = R^4$ = n-Butyl oder einen 2-Methylpropyl und A = $-CH_2CH_2OCH_2CH_2-$ gilt $M_E$ = 266,31 g/mol und $M_R$ = 224,19 g/mol. Für die nicht erfindungsgemäße Vergleichssubstanz VS1 aus Poly(alkylenphosphaten) der Formel (I) mit $R^1 = R^2 = R^3 = R^4$ = Ethyl und A = $CH_2CH_2OCH_2CH_2$-gilt $M_E$ = 182,16 g/mol und $M_R$ = 194,14 g/mol. Die Ergebnisse sind in Tabelle 1 aufgelistet.

**Tabelle 1: Verwendete Rohstoffe (Gewichtsteile) zur Herstellung der erfindungsgemäßen Mischungen (Synthesebeispiele S1 bis S5) und der nicht erfindungsgemäßen Vergleichssubstanz VS1 und deren Eigenschaften**

| Beispiel | S1 | S2 | S3 | S4 | S5 | VS1 |
|---|---|---|---|---|---|---|
| Phosphoroxychlorid | 149,6 | 182,8 | 154,1 | 151,7 | 154,1 | 306,7 |
| Diethylenglycol | 74,0 | 68,3 | 62,7 | 66,3 | 62,7 | 118,7 |
| 2-Methylpropanol | 380,0 | 500,0 | 444,7 | 360,0 | | |
| n-Butanol | | | | | 444,7 | |
| Ethanol | | | | | | 618,2 |
| Viskosität [mPas] | 315 | 79 | 97 | 138 | 93 | 58 |
| Mn [g/mol] | 844 | 608 | 656 | 709 | 649 | 462 |
| $\overline{n}$ | 2,58 | 1,53 | 1,74 | 1,97 | 1,71 | 1,44 |

## Bestimmung der Wasseraufnahme

Für die Versuche wurden die erfindungsgemäße Mischung S3 und die Vergleichssubstanz VS1 verwendet. Zur Bestimmung der Wasseraufnahme wurden jeweils 100 ml der zu messenden Mischung in ein 250 ml Becherglas (Höhe 12 cm, Durchmesser 6 cm) gefüllt und in einer Klimakammer offen bei 23 °C und 50 % relativer Luftfeuchtigkeit für 7 Tage gelagert. Der Wassergehalt der Mischungen wurde mittels Karl-Fischer-Titration nach DIN 51777 bestimmt. Vor der Wasserbestimmung wurden die Proben jeweils durch Rühren homogenisiert. Die Ergebnisse sind in Tabelle 2 aufgelistet.

**Tabelle 2: Wasseraufnahme der erfindungsgemäßen Mischung S3 und der nicht erfindunsgemäßen Vergleichssubstanz VS1**

| Substanz | Wasseraufnahme nach 7 Tagen Lagerung [Gew.-%] |
|---|---|
| S3 | 0,75 |
| VS1 | 1,50 |

**Auswertung der Ergebnisse zur Wasseraufnahme**

Nach den in Tabelle 2 aufgelisteten Ergebnissen zeigt die nicht erfindungsgemäße Vergleichssubstanz VS1 unter den Testbedingungen eine erhebliche Wasseraufnahme. Ohne aufwändige Vorkehrungen nimmt das Produkt bald eine Wassermenge auf, die in technischen Anwendungen störend sein kann. Dem gegenüber zeigt die erfindungsgemäße Mischung S3 eine deutlich geringere Wasseraufnahme als die Vergleichssubstanz VS1. Damit zeichnet sie sich durch eine geringere Hygroskopie aus, was in wasserempfindlichen technischen Anwendungen einen Vorteil darstellt.

**Bestimmung der Hydrolysestabilität**

Von der erfindungsgemäßen Mischung S3 und der Vergleichssubstanz VS1 wurde durch Titration mir 0,1 molarer Natronlauge die Säurezahl bestimmt. Dann wurden Proben der beiden Substanzen mit 10 Gew.-% Leitungswasser vermischt und die Mischung eine Woche bei 60 °C gelagert. Nach der Lagerung wurde wie oben die Säurezahl titriert. Die Ergebnisse sind in Tabelle 3 aufgelistet.

**Tabelle 3: Hydrolysestabilität der erfindungsgemäßen Mischung S3 und der nicht erfindunsgemäßen Vergleichssubstanz VS1**

| Substanz | Säurezahl vor der Lagerung [mg KOH/g] | Säurezahl nach der Lagerung [mg KOH/g] | Anstieg der Säurezahl [mg KOH/g] |
|---|---|---|---|
| S3 | 0,18 | 0,19 | 0,01 |
| VS1 | 0,51 | 0,81 | 0,30 |

**Auswertung der Ergebnisse zur Hydrolysestabilität**

Nach den in Tabelle 3 aufgelisteten Ergebnissen führt die Lagerung der Substanzen in Gegenwart von Wasser zu einem Anstieg der Säurezahl. Dieser Anstieg ist darauf zurückzuführen, dass die Trialkylphosphate teilweise hydrolysiert werden, wobei saure Partialester der Phosphorsäure und die entsprechenden Alkohole gebildet werden. Die gebildete Säuremenge ist umso größer, je mehr Hydrolyse stattfindet.

Bei der nicht erfindungsgemäßen Vergleichssubstanz VS1 steigt die Säurezahl merklich um 0,30 mg KOH/g an. Dagegen ist bei der erfindungsgemäßen Mischung S3 nur ein minimaler Anstieg um 0,01 mg KOH/g zu verzeichnen. Unter denselben Testbedingungen zeigt die erfindungsgemäße Mischung S3 also eine höherer Hydrolysestabilität als die Vergleichssubstanz VS1.

Die Kombination aus geringerer Hygroskopie und höherer Hydrolysestabilität macht die erfindungsgemäßen Mischungen weniger anfällig für den schädlichen Einfluss, den ein Kontak mit Luftfeuchtigkeit bewirkt. Da Poly(alkylenphosphate) in verschiedenen technischen Anwendungen der Luftfeuchtigkeit ausgesetzt sind, wird ihr Einsatz beispielsweise als Schmierstoffe, Hydraulikflüssigkeiten, Weichmacher oder Flammschutzmittel dadurch erleichtert.

**Herstellung von Polyurethanweichschaumstoffen**

**Tabelle 4: Verwendete Rohstoffe zur Herstellung von Polyether-Polyurethanweichschaumstoffen**

| Komponente | Funktion | Beschreibung |
|---|---|---|
| A | Polyol | Arcol® 1105 (Covestro AG), Polyetherpolyol mit OHZ 56 mg KOH/g |
| B | Treibmittel | Wasser |
| C | Katalysator | Addocat 108® (LANXESS Deutschland GmbH), 70 %ige Lösung von Bis (2-dimethylaminoethyl)ether in Dipropylenglykol |
| D | Katalysator | Addocat® SO (LANXESS Deutschland GmbH), Zinn-II-2-ethylhexanoat |
| E | Stabilisator | Tegostab® B 8232 (Degussa), Siliconstabilisator |

(fortgesetzt)

| Komponente | Funktion | Beschreibung |
|---|---|---|
| F | Flammschutzmittel | F1: Vergleichssubstanz VS1<br>F2: erfindungsgemäße Mischung S4 |
| G | Diisocyanat | Desmodur® T 80 (Covestro AG), Toluylendiisocyanat, Isomerenmischung |

**Herstellung von Polyether-Polyurethanweichschaumstoffe**

Die Rohstoffe zur Herstellung von Polyether-Polyurethanweichschaumstoffen sind in Tabelle 4 angegeben. Die in Tabelle 5 nach Art und Menge angegebenen Komponenten mit Ausnahme des Diisocyanats (Komponente G) wurden zu einer homogenen Mischung verrührt. Dann wurde das Diisocyanat zugefügt und kurz intensiv untergerührt. Nach einer Startzeit von 15 bis 20 Sekunden und einer Steigzeit von 160 bis 180 Sekunden wurde ein Polyether-Polyurethanweichschaumstoff mit einem Raumgewicht von 33 $kg/m^3$ erhalten. Bei allen Versuchen wurden gleichmäßig feinporige Schaumstoffe erhalten.

**Bestimmung der Flammwidrigkeit**

Die Polyurethanweichschaumstoffe wurden nach den Vorgaben des Federal Motor Vehicle Safety Standards FMVSS-302 getestet und den Brandklassen SE (selbsterlöschend), SE/NBR (selbsterlöschend/keine Brennrate), SE/BR (selbsterlöschend/mit Brennrate), BR (Brennrate) und RB (schnell brennend) zugeordnet. Die Brandversuche wurden für jedes Beispiel fünfmal durchgeführt. Das schlechteste Ergebnis jeder Fünferreihe wurde in Tabelle 5 wiedergegeben.

**Tabelle 5: Zusammensetzung (Gewichtsteile) und Prüfergebnisse des erfindungsgemäßen Beispiels V3 und der nicht erfindunsgemäßen Vergleichsbeispiele V1 und V2 zu Polyether-Polyurethanweichschaumstoffen**

| Beispiel | V1 | V2 | V3 |
|---|---|---|---|
| A | 100 | 100 | 100 |
| B | 3,0 | 3,0 | 3,0 |
| C | 0,08 | 0,08 | 0,08 |
| D | 0,16 | 0,16 | 0,16 |
| E | 1,00 | 1,00 | 1,00 |
| F1 | | 4 | |
| F2 | | | 8 |
| G | 40,9 | 40,9 | 40,9 |
| MVSS-Klasse | RB | SE | SE |

**Auswertung der Ergebnisse zu Polyether-Polyurethanweichschaumstoffen**

In Abwesenheit eines Flammschutzmittels (Beispiel V1) brennt der Polyurethanweichschaumstoff rasch ab (MVSS-Brandklasse RB). Der Schaumstoff des Beispiels V2, der mit dem nicht erfindungsgemäßen Flammschutzmittel F1 ausgerüstet wurde und der Schaumstoff des Beispiels V3, der mit dem erfindungsgemäßen Flammschutzmittel F2 ausgerüstet wurde, erreichen beide die beste MVSS-Brandklasse SE (selbsterlöschend).

Fazit:

Wie aus den Ergebnissen der Tabellen 2 und 3 hervorgeht, zeichnen sich die erfindungsgemäßen Mischungen überraschender Weise durch eine geringere Hygroskopie und gleichzeitig durch erhöhte Hydrolysestabilität aus. Das macht die erfindungsgemäßen Mischungen insgesamt weniger anfällig für den schädlichen Einfluss den der Kontakt mit Luftfeuchtigkeit mit sich bringt. Insbesondere im Fall der Herstellung von Polyurethanen ist der Wassergehalt der eingesetzten Flammschutzmittel immer unerwünscht, da er zu unkontrollierter Verschäumung führt. Somit stellt die verringerte Hygroskopie der erfindungsgemäßen Mischungen einen großen technischen Vorteil dar. Weiterhin besitzen

die erfindungsgemäßen, hinsichtlich ihrer Hygroskopie verbesserten, Mischungen ausgezeichnete Flammschutzwirkung in Polyurethanschaumstoffen, die den aus dem Stand der Technik bekannten Flammschutzmitteln gleich kommt, wie aus Tabelle 5 ersichtlich ist.

**Patentansprüche**

1. Mischung **dadurch gekennzeichnet, dass** sie mindestens drei Poly(alkylenphosphate) entsprechend der Formel (I) enthält,

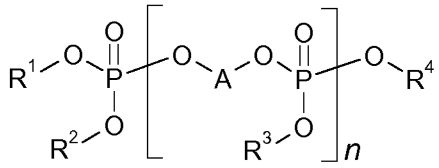

(I),

worin

$R^1$, $R^2$, $R^3$ und $R^4$ für einen 2-Methylpropylrest stehen,
A für einen Rest der Formel $-CHR^5-CHR^6-(O-CHR^7-CHR^8)_a-$ steht,
worin

a für eine ganze Zahl von 1 bis 5 steht und
$R^5$, $R^6$, $R^7$ und $R^8$ unabhängig voneinander für Wasserstoff oder Methyl stehen,
und

*n* für eine ganze Zahl von 0 bis 100, bevorzugt von 0 bis 50 und besonders bevorzugt von 0 bis 30 steht,

mit der Maßgabe, dass sich mindestens drei der in der Mischung enthaltenen Poly(alkylenphosphate) der Formel (I) zumindest in der Anzahl *n* der Repetiereinheiten voneinander unterscheiden, und
der gewichtete Mittelwert der Anzahl der Repetiereinheiten $\bar{n}$ der Poly(alkylenphosphate) der Formel (I) im Bereich von 1,10 bis 4,00 liegt.

2. Mischung gemäß Anspruch 1, **dadurch gekennzeichnet, dass** a für die Zahl 1 steht.

3. Mischung gemäß Anspruch 1 oder 2, **dadurch gekennzeichnet, dass** $R^5$, $R^6$, $R^7$ und $R^8$ alle gleich sind und für Wasserstoff stehen.

4. Mischung gemäß wenigstens einem der Ansprüche 1 bis 3, **dadurch gekennzeichnet, dass** der gewichtete Mittelwert der Anzahl der Repetiereinheiten $\bar{n}$ der mindestens drei Poly-(alkylenphosphate) der Formel (I) im Bereich von 1,2 bis 3,0, besonders bevorzugt im Bereich von 1,3 bis 2,0 und ganz besonders bevorzugt im Bereich von 1,30 bis 1,90 liegt.

5. Mischung gemäß wenigstens einem der Ansprüche 1 bis 4, **dadurch gekennzeichnet, dass** sie eine dynamische Viskosität von 20 bis 500 mPas bei 23 °C besitzt.

6. Verfahren zur Herstellung einer Mischung gemäß wenigstens einem der Ansprüche 1 bis 5, **dadurch gekennzeichnet, dass** in einer ersten Stufe eine Dihydroxyverbindung der Formel

HO-A-OH (II),

worin A die in Anspruch 1 angegebene Bedeutung hat,
mit Phosphoroxychlorid $POCl_3$ umgesetzt wird, wobei pro Mol an Dihydroxyverbindung der Formel (II) mehr als 1,0 Mol und weniger als 2,0 Mol an $POCl_3$ eingesetzt wird, und die so erhaltene Mischung von Chlorphosphaten der Formel (III)

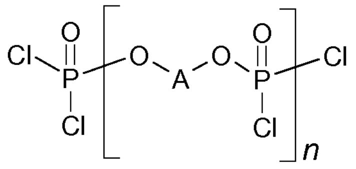

(III),

worin n für eine ganze Zahl von 0 bis 100, bevorzugt von 0 bis 50 und besonders bevorzugt von 0 bis 30 steht, und
A die in Anspruch 1 angegebene Bedeutung hat,

in einer zweiten Stufe mit 2-Methylpropanol umgesetzt wird.

**7.** Zubereitung enthaltend eine Mischung nach mindestens einem der Ansprüche 1 bis 5 und mindestens eine weitere Komponente ausgewählt aus der Gruppe bestehend aus

a) von der erfindungsgemäßen Mischung verschiedenen Flammschutzmitteln,
b) Antioxidantien und Stabilisatoren,
c) Polyolen,
d) Katalysatoren und
e) Farbmitteln.

**8.** Verwendung einer Mischung gemäß wenigstens einem der Ansprüche 1 bis 5 oder einer Zubereitung gemäß Anspruch 9 als Flammschutzmittel.

**9.** Verwendung nach Anspruch 8, **dadurch gekennzeichnet, dass** es sich um die Verwendung als Flammschutzmittel für Polyurethane handelt.

**10.** Verwendung nach Anspruch 9, **dadurch gekennzeichnet, dass** es sich bei den Polyurethanen um Schaumstoffe, vorzugsweise um Polyurethanweichschaumstoffe basierend auf Polyether-Polyolen oder Polyester-Polyolen handelt.

**11.** Flammwidrige Polyurethane enthaltend eine Mischung nach mindestens einem der Ansprüche 1 bis 5 oder eine Zubereitung gemäß Anspruch 7.

**12.** Flammwidrige Polyurethane gemäß Anspruch 11, **dadurch gekennzeichnet, dass** es sich dabei um Polyurethanschaumstoffe handelt, vorzugsweise Polyurethanweichschaumstoffe basierend auf Polyether- oder Polyesterpolyolen.

**13.** Verfahren zur Herstellung von flammwidrigen Polyurethanen gemäß Anspruch 11, **dadurch gekennzeichnet, dass** mindestens ein organisches Polyisocyanat mit einer Polyolkomponente enthaltend mindestens eine Verbindung mit mindestens zwei gegenüber Isocyanaten reaktionsfähigen Wasserstoffatomen in Gegenwart einer Mischung gemäß wenigstens einem der Ansprüche 1 bis 5 und gegebenenfalls in Gegenwart von üblichen Treibmitteln, Stabilisatoren, Katalysatoren, Aktivatoren und/oder weiteren üblichen Hilfs- und Zusatzstoffen bei 20 bis 80 °C umgesetzt wird.

**14.** Verwendung eines flammwidrigen Polyurethans gemäß Anspruch 11 in Möbelpolsterungen, Textileinlagen, Matratzen, Fahrzeugsitzen, Armlehnen, Bauelementen, Sitz- und Armaturverkleidungen, Kabelummantelungen, Dichtungen, Beschichtungen, Lacken, Klebstoffen, Haftvermittlern und Fasern.

**15.** Formteile, Lacke, Klebstoffe, Beschichtungen, Haftvermittler und Fasern auf Basis von flammwidrigen Polyurethanen gemäß wenigstens einem der Ansprüche 11 und 12.

**Claims**

**1.** Mixture **characterized in that** it comprises at least three poly(alkylene phosphates) corresponding to the formula (I)

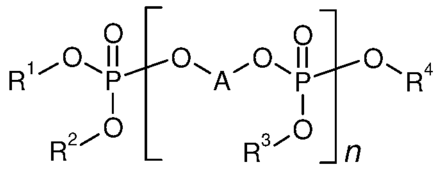

(I),

in which

$R^1$, $R^2$, $R^3$ and $R^4$ are a 2-methylpropyl moiety,
A is a moiety of the formula $-CHR^5-CHR^6-(O-CHR^7-CHR^8)_a-$,
in which

a is an integer from 1 to 5 and
$R^5$, $R^6$, $R^7$ and $R^8$ are mutually independently hydrogen or methyl,
and

*n* is an integer from 0 to 100, preferably from 0 to 50 and particularly preferably from 0 to 30,

with the proviso that at least three of the poly(alkylene phosphates) of the formula (I) present in the mixture differ from one another at least in the number *n* of the repeating units, and
the weight-average value of the number of the repeating units $\bar{n}$ in the poly(alkylene phosphates) of the formula (I) is in the range from 1.10 to 4.00.

2. Mixture according to Claim 1, **characterized in that** a is the number 1.

3. Mixture according to Claim 1 or 2, **characterized in that** $R^5$, $R^6$, $R^7$ and $R^8$ are all identical and are hydrogen.

4. Mixture according to at least one of Claims 1 to 3, **characterized in that** the weight-average value of the number of the repeating units $\bar{n}$ in the at least three poly(alkylene phosphates) of the formula (I) is in the range from 1.2 to 3.0, particularly preferably in the range from 1.3 to 2.0 and very particularly preferably in the range from 1.30 to 1.90.

5. Mixture according to at least one of Claims 1 to 4, **characterized in that** its dynamic viscosity is from 20 to 500 mPas at 23°C.

6. Process for the production of a mixture according to at least one of Claims 1 to 5, **characterized in that** in a first stage a dihydroxy compound of the formula

HO-A-OH (II),

in which A is as defined in Claim 1,
is reacted with phosphorus oxychloride $POCl_3$, wherein the quantity of $POCl_3$ used per mole of dihydroxy compound of the formula (II) is more than 1.0 mol and less than 2.0 mol and the resultant mixture of chlorophosphates of the formula (III)

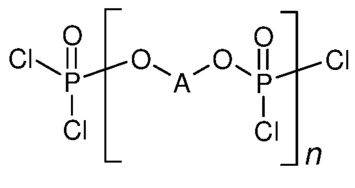

(III),

in which n is an integer from 0 to 100, preferably from 0 to 50 and particularly preferably from 0 to 30,
and
A is as defined in Claim 1,

is reacted in a second stage with 2-methylpropanol.

**7.** Preparation comprising a mixture according to at least one of Claims 1 to 5 and at least one other component selected from the group consisting of

a) flame retardants differing from the mixture of the invention,
b) antioxidants and stabilizers,
c) polyols,
d) catalysts and
e) colourants.

**8.** Use of a mixture according to at least one of Claims 1 to 5 or of a preparation according to Claim 9 as flame retardant.

**9.** Use according to Claim 8, **characterized in that** it relates to the use as flame retardant for polyurethanes.

**10.** Use according to Claim 9, **characterized in that** the polyurethanes are foams, preferably flexible polyurethane foams based on polyether polyols or on polyester polyols.

**11.** Flame-retardant polyurethanes comprising a mixture according to at least one of Claims 1 to 5 or a preparation according to Claim 7.

**12.** Flame-retardant polyurethanes according to Claim 11, **characterized in that** they are polyurethane foams, preferably flexible polyurethane foams based on polyether polyols or on polyester polyols.

**13.** Process for the production of flame-retardant polyurethanes according to Claim 11, **characterized in that** at least one organic polyisocyanate is reacted with a polyol component comprising at least one compound having at least two hydrogen atoms reactive towards isocyanates in the presence of a mixture according to at least one of Claims 1 to 5 and optionally in the presence of conventional blowing agents, stabilizers, catalysts, activators and/or other conventional auxiliaries and additives at from 20 to 80°C.

**14.** Use of a flame-retardant polyurethane according to Claim 11 in furniture cushioning, textile inserts, mattresses, vehicle seats, armrests, components, seat and instrument panel trim, cable sheathing, seals, coatings, paints, adhesives, adhesion promoters and fibres.

**15.** Mouldings, paints, adhesives, coatings, adhesion promoters and fibres based on flame-retardant polyurethanes according to at least one of Claims 11 and 12.

## Revendications

**1.** Mélange, **caractérisé en ce qu'**il contient au moins trois poly(phosphates d'alkylène) correspondant à la formule (I),

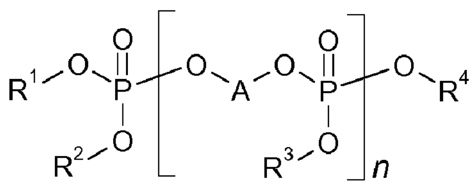

(I),

dans laquelle

$R^1$, $R^2$, $R^3$ et $R^4$ représentent un radical 2-méthylpropyle,
A représente un radical de la formule $-CHR^5-CHR^6-(O-CHR^7-CHR^8)_a-$,
dans laquelle

a représente un nombre entier de 1 à 5, et
$R^5$, $R^6$, $R^7$ et $R^8$ représentent indépendamment les uns des autres hydrogène ou méthyle,

et

*n* représente un nombre entier de 0 à 100, de préférence de 0 à 50, et de manière particulièrement préférée de 0 à 30,

à condition qu'au moins trois des poly(phosphates d'alkylène) de la formule (I) contenus dans le mélange diffèrent les uns des autres au moins au niveau du nombre *n* des unités de répétition, et
la valeur moyenne pondérée du nombre des unités de répétition $\overline{n}$ des poly(phosphates d'alkylène) de la formule (I) se situe dans la plage allant de 1,10 à 4,00.

2. Mélange selon la revendication 1, **caractérisé en ce qu'**a représente le nombre 1.

3. Mélange selon la revendication 1 ou 2, **caractérisé en ce que** $R^5$, $R^6$, $R^7$ et $R^8$ sont tous identiques et représentent hydrogène.

4. Mélange selon au moins l'une quelconque des revendications 1 à 3, **caractérisé en ce que** la valeur moyenne pondérée du nombre des unités de répétition $\overline{n}$ desdits au moins trois poly(phosphates d'alkylène) de la formule (I) se situe dans la plage allant de 1,2 à 3,0, de manière particulièrement préférée dans la plage allant de 1,3 à 2,0, et de manière tout particulièrement préférée dans la plage allant de 1,30 à 1,90.

5. Mélange selon au moins l'une quelconque des revendications 1 à 4, **caractérisé en ce qu'**il présente une viscosité dynamique de 20 à 500 mPas à 23 °C.

6. Procédé de fabrication d'un mélange selon au moins l'une quelconque des revendications 1 à 5, **caractérisé en ce que** lors d'une première étape, un composé dihydroxy de la formule

HO-A-OH (II)

dans laquelle A a la signification indiquée dans la revendication 1,
est mis en réaction avec de l'oxychlorure de phosphore $POCl_3$, plus de 1,0 mole et moins de 2,0 moles de $POCl_3$ étant utilisé par mole de composé dihydroxy de la formule (II), et le mélange de chlorophosphates de la formule (III) ainsi obtenu

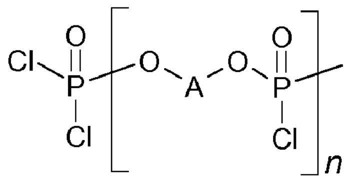

(III),

dans laquelle n représente un nombre entier de 0 à 100, de préférence de 0 à 50 et de manière particulièrement préférée de 0 à 30,
et
A a la signification indiquée dans la revendication 1, est mis en réaction avec du 2-méthylpropanol lors d'une deuxième étape.

7. Préparation contenant un mélange selon au moins l'une quelconque des revendications 1 à 5 et au moins un composant supplémentaire choisi dans le groupe constitué par :

a) les agents ignifuges différents du mélange selon l'invention,
b) les antioxydants et les stabilisateurs,
c) les polyols,
d) les catalyseurs et
e) les colorants.

8. Utilisation d'un mélange selon au moins l'une quelconque des revendications 1 à 5 ou d'une préparation selon la revendication 9 en tant qu'agent ignifuge.

9. Utilisation selon la revendication 8, **caractérisée en ce qu'**il s'agit de l'utilisation en tant qu'agent ignifuge pour polyuréthanes.

10. Utilisation selon la revendication 9, **caractérisée en ce que** les polyuréthanes consistent en des mousses, de préférence en des mousses souples de polyuréthane à base de polyéther-polyols ou de polyester-polyols.

11. Polyuréthanes ignifugés contenant un mélange selon au moins l'une quelconque des revendications 1 à 5 ou une préparation selon la revendication 7.

12. Polyuréthanes ignifugés selon la revendication 11, **caractérisés en ce qu'**il s'agit de mousses de polyuréthane, de préférence de mousses souples de polyuréthane à base de polyéther- ou polyester-polyols.

13. Procédé de fabrication de polyuréthanes ignifugés selon la revendication 11, **caractérisé en ce qu'**au moins un polyisocyanate organique est mis en réaction avec un composant polyol contenant au moins un composé comprenant au moins deux atomes d'hydrogène réactifs avec les isocyanates en présence d'un mélange selon au moins l'une quelconque des revendications 1 à 5 et éventuellement en présence d'agents gonflants, de stabilisateurs, de catalyseurs, d'activateurs usuels et/ou d'autres adjuvants et additifs usuels à 20 à 80 °C.

14. Utilisation d'un polyuréthane ignifugé selon la revendication 11 dans des rembourrages de meubles, des inserts textiles, des matelas, des sièges de véhicules, des accoudoirs, des éléments de construction, des habillages de sièges et d'armatures, des gainages de câbles, des joints d'étanchéité, des revêtements, des vernis, des adhésifs, des promoteurs d'adhésion et des fibres.

15. Pièces moulées, vernis, adhésifs, revêtements, promoteurs d'adhésion et fibres à base de polyuréthanes ignifugés selon au moins l'une quelconque des revendications 11 et 12.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2632767 A
- US 4056480 A
- US 2782128 A
- EP 2687535 B1
- EP 2848640 A1
- EP 2687534 A
- DE 1694142
- DE 1694215
- DE 1720768
- DE 2832253
- DE 2732292
- US 2764565 A
- GB 1162517 A
- DE 2153086


### In der Beschreibung aufgeführte Nicht-Patentliteratur


- Kunststoff-Handbuch. **G. OERTEL.** Polyurethane. Carl-Hanser-Verlag, 1993, vol. VII
- Polyurethanes. **NORBERT ADAM ; GEZA AVAR ; HERBERT BLANKENHEIM ; WOLFGANG FRIEDERICHS ; MANFRED GIERSIG ; ECKEHARD WEIGAND ; MICHAEL HALFMANN ; FRIEDRICH-WILHELM WITTBECKER ; DONALD-RICHARD LARIMER ; UDO MAIER.** Ullmann's Encyclopedia of Industrial Chemistry Release 2005, Electronic Release. Wiley-VCH, 2005
- **W. SIEFKEN.** *Justus Liebigs Annalen der Chemie,* vol. 562, 75-136
- Kunststoff-Handbuch. Carl-Hanser-Verlag, 1993, vol. VII, 104-123
- Kunststoff-Handbuch. **G. OERTEL.** Polyurethane. Carl-Hanser-Verlag, 1993, vol. VII, 139-192